(19) Europäisches Patentamt
European Patent Office
Office européen des brevets

(11) **EP 4 636 528 A1**

(12) **EUROPEAN PATENT APPLICATION**
published in accordance with Art. 153(4) EPC

(43) Date of publication:
**22.10.2025 Bulletin 2025/43**

(21) Application number: **24779375.5**

(22) Date of filing: **11.03.2024**

(51) International Patent Classification (IPC):
**G05D 1/43** *(2024.01)*    **G05D 1/648** *(2024.01)*

(52) Cooperative Patent Classification (CPC):
**G05D 1/43; G05D 1/648**

(86) International application number:
**PCT/JP2024/009402**

(87) International publication number:
**WO 2024/203245 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 JP 2023048994**

(71) Applicant: JFE Steel Corporation
**Tokyo 100-0011 (JP)**

(72) Inventors:
• **TOKUMOTO Yuta**
  **Tokyo 100-0011 (JP)**
• **NISHIZAWA Yuji**
  **Tokyo 100-0011 (JP)**
• **MATSUFUJI Emu**
  **Tokyo 100-0011 (JP)**

(74) Representative: **Grünecker Patent- und Rechtsanwälte**
**PartG mbB**
**Leopoldstraße 4**
**80802 München (DE)**

(54) **MAP GENERATION METHOD, MAP GENERATION DEVICE, AND SURFACE INSPECTION DEVICE**

(57)    A map generation method of generating a two-dimensional map of a movement path of a cart 10 that moves on a surface of a cylindrical or a tubular three-dimensional object 50, the map generation method including: an acquisition step of acquiring measurement results of acceleration and angular velocity of the cart 10, and a measurement result of moving distance of the cart 10; a circumferential angle calculation step of calculating a circumferential angle of the cart 10, by applying the measurement result of acceleration to a first map transformation formula; an axial coordinate calculation step of calculating an axial coordinate of the cart 10, by applying the measurement result of angular velocity and the measurement result of moving distance to a second map transformation formula; and a map generation step of generating a two-dimensional map that records a position identified by the circumferential angle and the axial coordinate.

*FIG. 2*

## Description

TECHNICAL FIELD

The present disclosure relates to a map generation method and map generation device that generate a two-dimensional map of a surface of a three-dimensional object using a cart that moves on the surface of the object, and to a surface inspection device that inspects a surface of a three-dimensional object.

BACKGROUND

As described in Patent Literature (PTL) 1, as a method of mapping a position and a movement path of a cart traveling on a surface of a three-dimensional object, a method of measuring X-Y coordinates of the cart using, for example, an X-direction accelerometer, a Y-direction accelerometer, and an encoder attached to the cart is known. Furthermore, as described in Patent Literature (PTL) 2, a method of measuring a movement amount of a cart using a rotary encoder attached to the cart and mapping a position and a movement path of the cart in one dimension is known. Moreover, as described in Patent Literature (PTL) 3, a method of measuring three-dimensional coordinates of a cart using a plurality of wire encoders attached to the cart is known.

CITATION LIST

Patent Literature

PTL 1: JP H0949730 A
PTL 2: JP 2001050736 A
PTL 3: JP 2006170766 A

SUMMARY

(Technical Problem)

In the method described in PTL 1, it is possible to calculate a circumferential angle on a surface of a cylindrical object from calculated X-Y coordinates of a cart, but it is not possible to calculate a longitudinal moving distance. In addition, information regarding a diameter of the cylindrical object is necessary to calculate the circumferential angle on the surface of the cylindrical object from the X-Y coordinates. In the method described in PTL 1, a position and a movement path of the cart can be mapped only for a circumferential direction of a cylindrical object. Accordingly, in a case in which a cylindrical object is inspected by the cart, it is necessary to restrict the movement path of the cart to the circumferential direction only, or to restrict the cart to traveling straight ahead without turning it. That is, in a case in which inspections are conducted using the method described in PTL 1, the movement of the cart is greatly restricted, thereby limiting the contents of the inspection.

In the method described in PTL 2, it is possible to measure a moving distance of a cart on a cylindrical object and to generate a one-dimensional flaw detection map in the inspection of the cylindrical object. However, a circumferential angle of the cart on a surface of the cylindrical object is not known. Accordingly, it is necessary to measure the circumferential angle of the cart by another method in order to inspect the entire surface of the cylindrical object.

In the method described in PTL 3, it is possible to calculate a circumferential angle of a cart with respect to a surface of a cylindrical object and its longitudinal moving distance, by obtaining three-dimensional coordinates of the cart. However, for conversion to a coordinate system of the cylindrical object, a diameter of the cylindrical object and a complex map calculation formula are required. In particular, the diameter of the cylindrical object is often not known in the inspection. When the diameter of the cylindrical object is not known, errors in converting from the three-dimensional coordinates of the cart to the coordinate system of the cylindrical object become large.

It would be helpful to provide a map generation method and a map generation device that can easily and accurately map a position and a movement path of a cart on a surface of a three-dimensional object in two dimensions, and a surface inspection device that can inspect the surface of the three-dimensional object.

(Solution to Problem)

A map generation method according to an embodiment of the present disclosure is a method of generating a two-dimensional map of a movement path of a cart that moves on a surface of a cylindrical or a tubular three-dimensional object. The map generation method includes: an acquisition step of acquiring measurement results of acceleration and angular velocity of the cart while the cart moves on the surface of the three-dimensional object, and a measurement result of moving distance of the cart on the surface of the three-dimensional object; a circumferential angle calculation step of calculating a circumferential angle of the cart on the surface of the three-dimensional object, by applying the measurement result of acceleration acquired in the acquisition step to a first map transformation formula; an axial coordinate calculation step of calculating an axial coordinate of the cart on the surface of the three-dimensional object, by applying the measurement result of angular velocity and the measurement result of moving distance acquired in the acquisition step to a second map transformation formula; and a map generation step of generating a two-dimensional map that records a position identified by the circumferential angle calculated in the circumferential angle calculation step and the axial coordinate calculated in the axial coordinate calculation step.

A map generation device according to an embodiment of the present disclosure includes: a generation unit configured to generate a two-dimensional map of a movement path of a cart that moves on a surface of a cylindrical or a tubular three-dimensional object; and an acquisition unit configured to acquire measurement results of acceleration and angular velocity of the cart, and a measurement result of moving distance of the cart on the surface of the three-dimensional object. The generation unit is configured to: calculate a circumferential angle of the cart on the surface of the three-dimensional object, by applying the measurement result of acceleration of the cart to a first map transformation formula; calculate an axial coordinate of the cart on the surface of the three-dimensional object, by applying the measurement result of angular velocity of the cart and the measurement result of moving distance of the cart to a second map transformation formula; and generate a two-dimensional map that records a position identified by the circumferential angle of the cart and the axial coordinate of the cart.

A surface inspection device according to an embodiment of the present disclosure includes: the map generation device; and an inspection device configured to inspect the surface at a predetermined position when the cart moves to the predetermined position. The generation unit of the map generation device is configured to reflect an inspection result of the surface at the predetermined position in a point on the two-dimensional map that corresponds to the predetermined position.

(Advantageous Effect)

According to the present disclosure, the map generation method and the map generation device that can easily and accurately map a position and a movement path of a cart on a surface of a three-dimensional object in two dimensions, and the surface inspection device that can inspect the surface of the three-dimensional object are provided.

BRIEF DESCRIPTION OF THE DRAWINGS

In the accompanying drawings:

FIG. 1 is a block diagram illustrating an example configuration of a map generation system according to the present disclosure;

FIG. 2 is a plan view illustrating an example configuration of a cart according to the present disclosure;

FIG. 3A is a schematic diagram illustrating an example of a cylindrical three-dimensional object for which a two-dimensional map is to be generated, and FIG. 3B illustrates a two-dimensional map in which a surface of the cylindrical three-dimensional object of FIG. 3A is developed and in which positions can be identified by axial coordinates and circumferential angles of the cylinder;

FIG. 4A is a view illustrating an example of a path along which the cart moves on the surface of the cylindrical three-dimensional object along an axial direction, and FIG. 4B is a view illustrating the path of FIG. 4A on the two-dimensional map;

FIG. 5A is a view illustrating an example of a path along which the cart moves on the surface of the cylindrical three-dimensional object along a circumferential direction, and FIG. 5B is a view illustrating the path of FIG. 5A on the two-dimensional map;

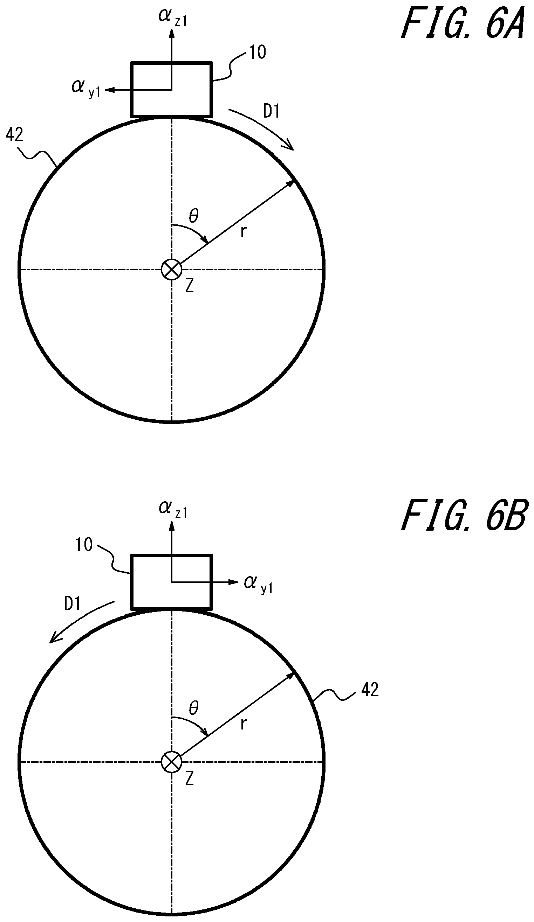

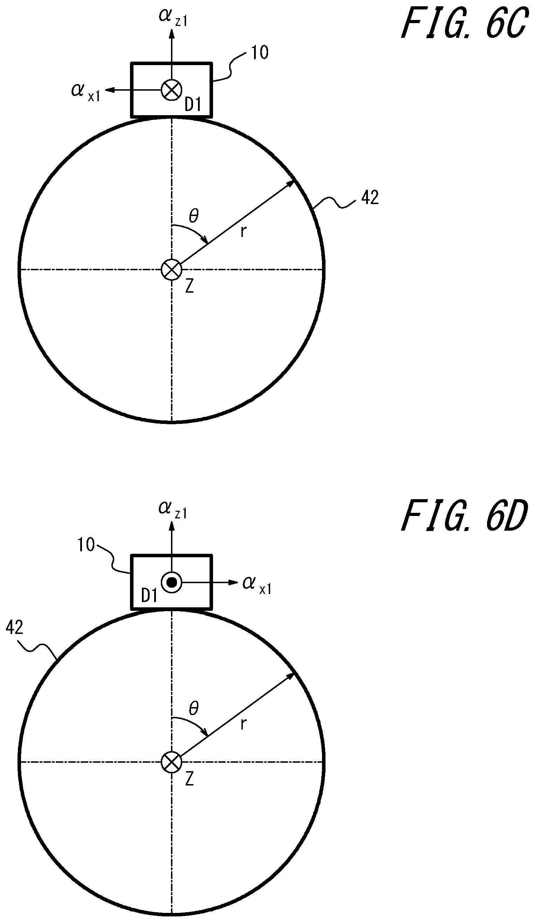

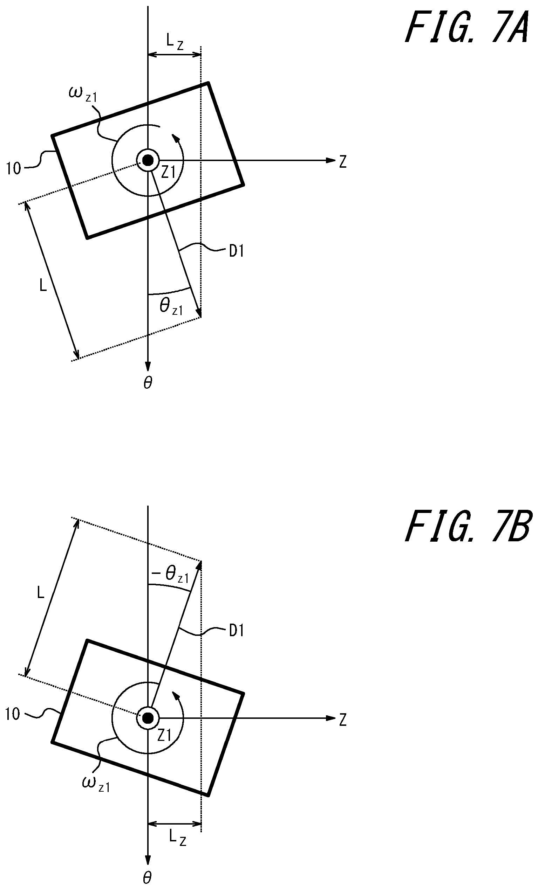

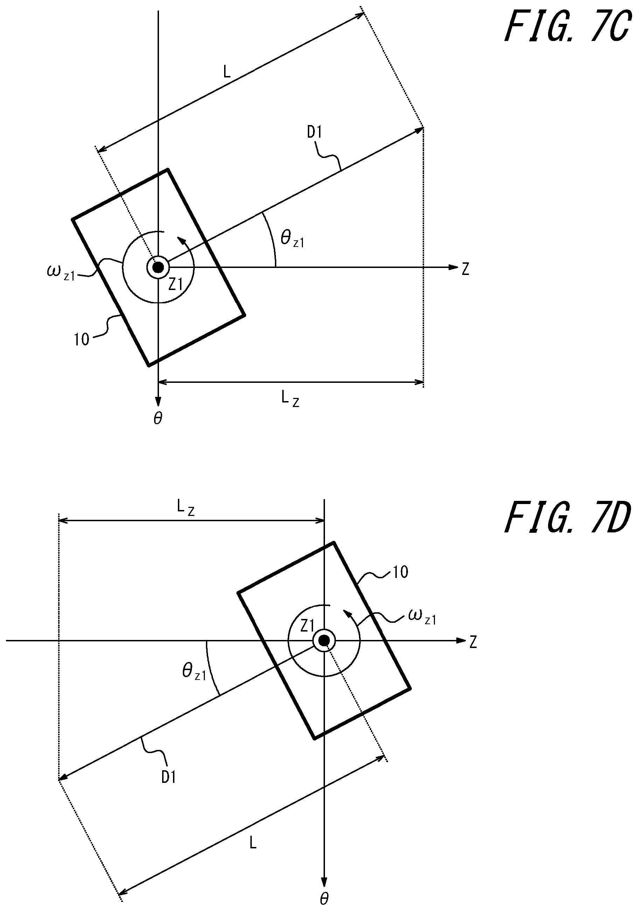

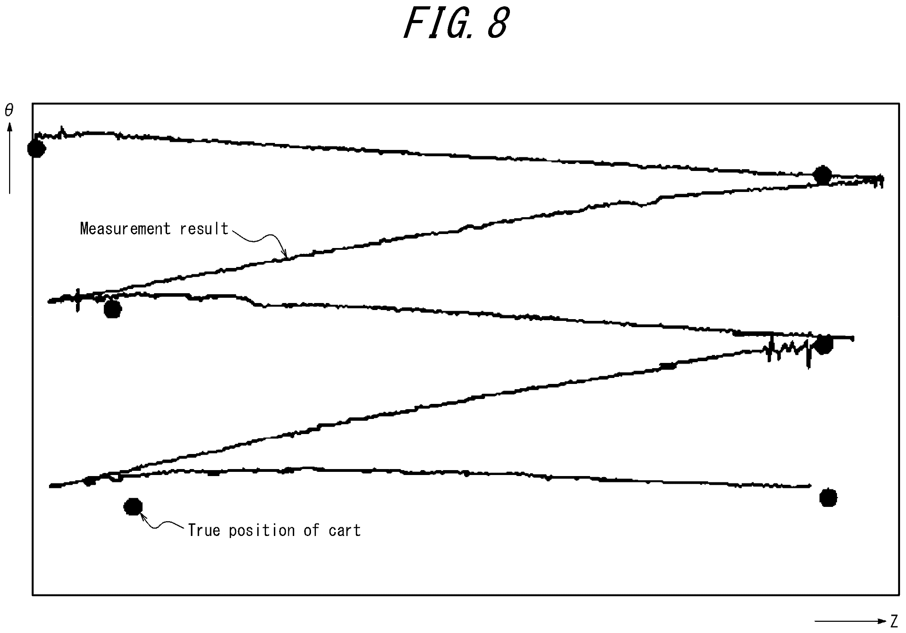

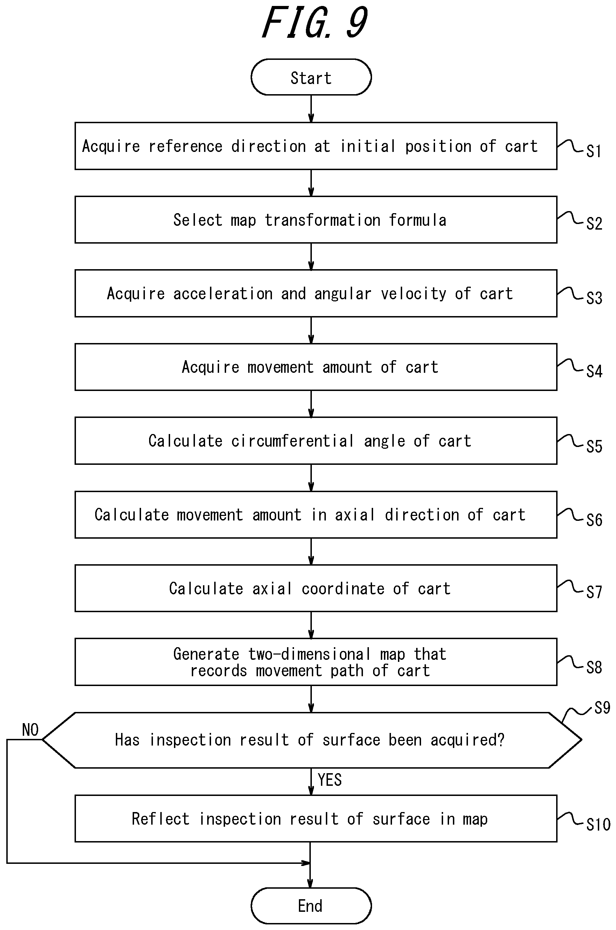

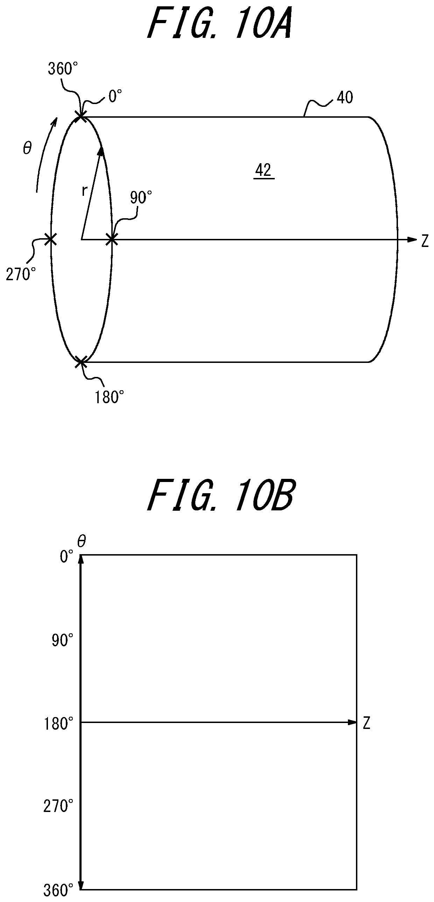

FIG. 6A is a view illustrating an axis of acceleration in a cross-sectional view of the cylindrical three-dimensional object as viewed in a positive direction in the axial direction, in a case in which a reference direction at an initial position of the cart is clockwise in the circumferential direction, FIG. 6B is a view illustrating an axis of acceleration in a cross-sectional view of the cylindrical three-dimensional object as viewed in the positive direction in the axial direction, in a case in which a reference direction at an initial position of the cart is counterclockwise in the circumferential direction, FIG. 6C is a view illustrating an axis of acceleration in a cross-sectional view of the cylindrical three-dimensional object as viewed in the positive direction in the axial direction, in a case in which a reference direction at an initial position of the cart is the positive direction in the axial direction, and FIG. 6D is a view illustrating an axis of acceleration in a cross-sectional view of the cylindrical three-dimensional object as viewed in the positive direction in the axial direction, in a case in which a reference direction at an initial position of the cart is a negative direction in the axial direction; FIG. 7A is a view illustrating an angle of a reference direction of the cart in a plan view of the surface of the cylindrical three-dimensional object, in a case in which a reference direction at an initial position of the cart is clockwise in the circumferential direction, FIG. 7B is a view illustrating an angle of a reference direction of the cart in a plan view of the surface of the cylindrical three-dimensional object, in a case in which a reference direction at an initial position of the cart is counterclockwise in the circumferential direction, FIG. 7C is a view illustrating an angle of a reference direction of the cart in a plan view of the surface of the cylindrical three-dimensional object, in a case in which a reference direction at an initial position of the cart is the positive direction in the axial direction, and FIG. 7D is a view illustrating an angle of a reference direction of the cart in a plan view of the surface of the cylindrical three-dimensional object, in a case in which a reference direction at an initial position of the cart is the negative direction in the axial direction; FIG. 8 illustrates an example of a two-dimensional map that records a measured result of movement path of the cart measured by executing a map generation method according to the present disclosure and true positions of the cart in a two-dimensional plane; FIG. 9 is a flowchart illustrating example procedures of the map generation method and a surface inspection method according to the present disclosure; and FIG. 10A is a schematic diagram illustrating a modification of the cylindrical three-dimensional object for which a two-dimensional map is to be generated, and FIG. 10B illustrates a two-dimensional map in which a surface of the cylindrical three-dimensional object of FIG. 10A is developed and in which positions can be identified by axial coordinates and circumferential angles of the cylinder.

DETAILED DESCRIPTION

Hereinafter, embodiments of a map generation method, a map generation device, and a surface inspection device according to the present disclosure will be described based on the drawings. Each drawing is schematic and may differ from the reality. The following embodiments are examples of devices or methods for embodying technical ideas of the present disclosure, and configurations are not limited to those described below. That is, various changes can be made to the technical ideas of the present disclosure within the technical scope disclosed in the claims.

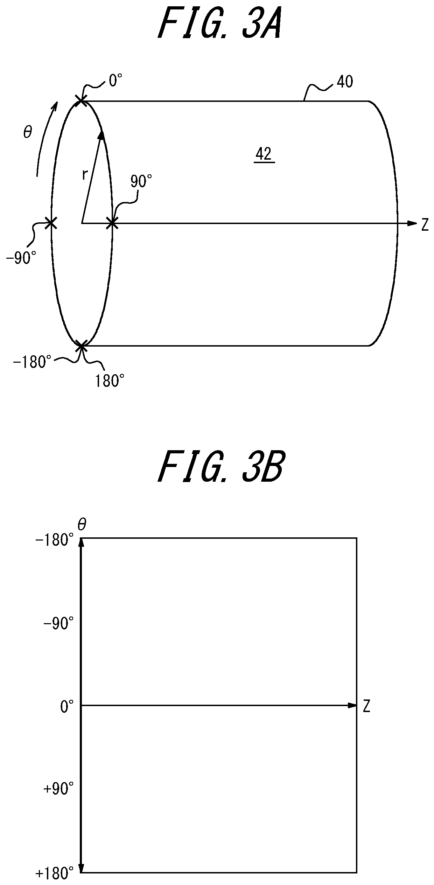

In the present disclosure, an object 40 (refer to FIG. 3A or the like), for which a two-dimensional map is to be generated, is a cylindrical or tubular three-dimensional object. In the following embodiment, an example configuration for generating a two-dimensional map of a surface 42 (refer to FIG. 3A or the like) of the object 40 in a case in which the object 40 is a cylindrical three-dimensional object will be described.

(Example Configuration of Map Generation System 1)

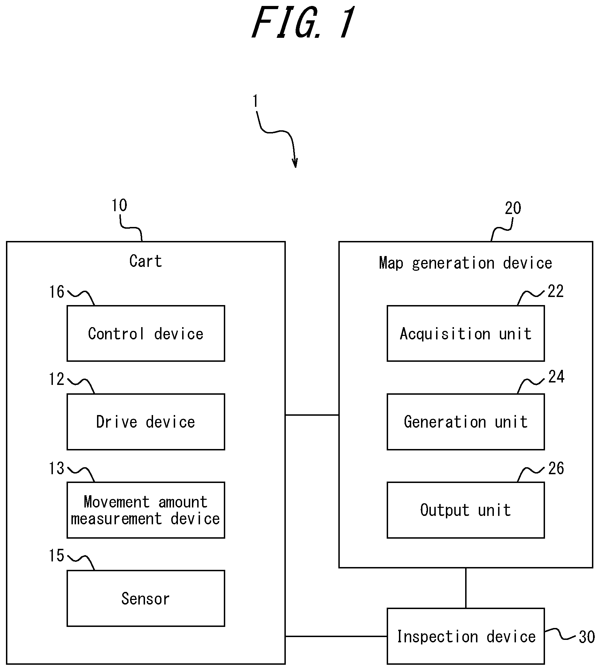

As illustrated in FIG. 1, a map generation system 1 according to an embodiment of the present disclosure includes a cart 10, a map generation device 20, and an inspection device 30. The cart 10 moves on the surface 42 of the object 40. The map generation device 20 generates a two-dimensional map that records a path along which the cart 10 moves on the surface 42.

The map generation system 1 does not need to include the inspection device 30. In a case in which the map generation system 1 includes the inspection device 30, it is also referred to as an inspection system. In a case in which the map generation system 1 includes the inspection device 30, the inspection device 30 inspects the surface 42 of the object 40 at one or more positions along the path along which the cart 10 moves. The map generation device 20 reflects inspection results of the surface 42 of the object 40 by the inspection device 30 in the two-dimensional map, by associating them with positions of the cart 10 in the two-dimensional map.

<Cart 10>

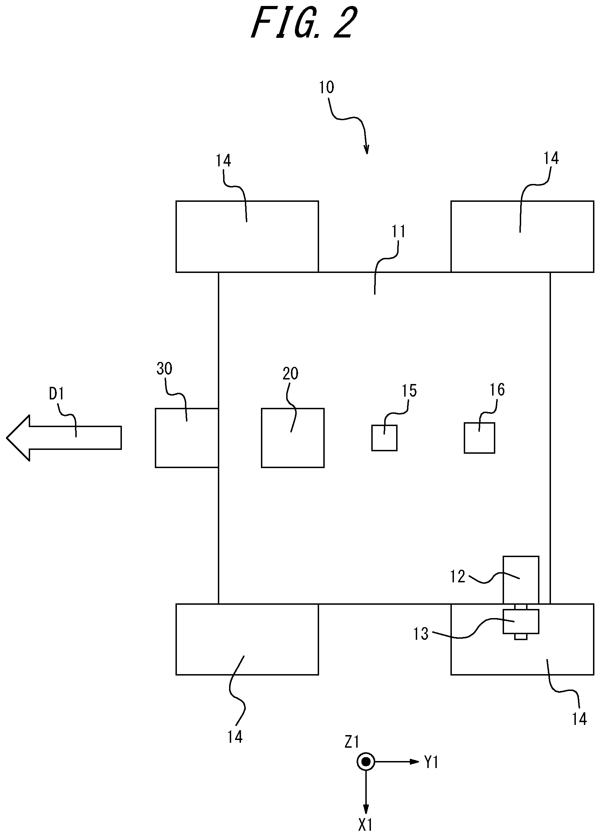

As illustrated in FIG. 1 and FIG. 2, the cart 10 includes a housing 11, a drive device 12, a movement amount measurement device 13, wheels 14, a sensor 15, and a control device 16. The cart 10 is magnetically attached to the surface 42 of the object 40 via the wheels 14, and moves on the surface 42 of the object 40 by the drive device 12 driving the wheels 14.

The wheels 14 are attached to the housing 11. The wheels 14 are configured to include a material that generates magnetic force. In the present embodiment, the wheels 14 are magnet wheels with a built-in magnet. In a case in which the surface 42 of the object 40 is magnetic, the wheels 14 are magnetically attached to the surface 42 by magnetic force. Because the wheels 14 are magnetically attached to the surface 42, the housing 11 is prevented from falling from the surface 42 even when the surface 42 is oriented in a direction other than vertically upward. Accordingly, the cart 10 can be magnetically attached to the surface 42 and move on the surface 42 not only when the surface 42 of the cylindrical three-dimensional object is facing vertically upward, but also when the surface 42 is facing vertically downward.

The number of wheels 14 is not limited to four, but may be three or less or five or more. The wheels 14 may be replaced by various other means, such as an infinite track or crawlers (so-called Caterpillars® [Caterpillar is a registered trademark in Japan, other countries, or both]).

The means for attaching the wheels 14 to the surface 42 of the object 40 is not limited to magnetic attachment using magnetic force, but may include various other means, such as suction by suction cups.

The drive device 12 may include power, such as a motor or an engine. The drive device 12 is controlled by the control device 16. The drive device 12 may move the cart 10, by rotating the wheels 14. The drive device 12 is configured to change the direction in which the cart 10 moves, by changing the orientation of the wheels 14. In other words, the cart 10 can move in any direction on the surface 42 while being attached to the surface 42 by the wheels 14.

The drive device 12 may be configured to move the cart 10 forward or to move the cart 10 backward. The direction in which the cart 10 moves forward is also referred to as a reference direction D1. The direction in which the cart 10 moves backward is the opposite of the reference direction. The drive device 12 may be configured to move the cart 10 in a direction that intersects the reference direction D1. In the present embodiment, the drive device 12 moves the cart 10 forward, but does not move the cart 10 backward or in the direction that intersects the reference direction D1.

The movement amount measurement device 13 may include, for example, an encoder. The encoder is an example of a distance measurement sensor. The encoder can measure the distance moved by the cart 10 when it moves forward, that is, the movement amount along the reference direction D1 of the cart 10, by measuring the rotation angle or the number of rotations of the wheels 14 by the drive device 12 or by measuring the number of rotations of the motor, the engine, or the like of the drive device 12.

The movement amount measurement device 13 may include a laser Doppler velocimeter, an optical flow sensor, or the like, instead of an encoder, as a distance measurement sensor. In a case in which a laser Doppler velocimeter or an optical flow sensor is used as a distance measurement sensor, the effect of slippage due to gravity during the movement of the cart 10 is reduced compared to a case in which an encoder is used. The reduction in the effect of slippage enhances the measurement accuracy of movement amount. As a result, calculation accuracy is enhanced when a position of the cart 10 is calculated using a measurement result of movement amount, as will be described later.

The sensor 15 is attached to the housing 11 of the cart 10, and it includes an accelerometer that measures the acceleration of the housing 11 and an angular velocimeter that measures the angular velocity of the housing 11. The accelerometer may include an acceleration sensor. The angular velocimeter may include a gyro sensor. The sensor 15 is configured to measure acceleration in the respective directions of an X1 axis, a Y1 axis, and a Z1 axis and angular velocity around each of the X1 axis, the Y1 axis, and the Z1 axis.

The sensor 15 may be configured as an Inertial Measurement Unit (IMU) that measures the acceleration and the angular velocity of the housing 11. The inertial measurement unit can detect three-dimensional inertial motion including translational motion and rotational motion in three orthogonal axial directions, and it corresponds to a device in which an accelerometer and an angular velocimeter are combined. In a case in which the sensor 15 is configured as an inertial measurement unit, measurement accuracy can be enhanced compared to a case in which it is configured to include an accelerometer and an angular velocimeter separately.

The sensor 15 is installed on the cart 10 such that acceleration and angular velocity can be measured along the X1 axis, the Y1 axis, and the Z1 axis extending in predetermined directions. In the present embodiment, it is assumed that the sensor 15 is installed on the cart 10 so that a normal direction of the surface 42 at a position where the housing 11 is magnetically attached is aligned with a positive direction of the Z1 axis. It is also assumed that the sensor 15 is installed on the cart 10 so that the reference direction D1 of the cart 10 is aligned with a negative direction of the Y1 axis. It is also assumed that the sensor 15 is installed on the cart 10 so that a direction of the cross product of a unit vector of a positive direction of the Y1 axis and a unit vector of the positive direction of the Z1 axis is aligned with a positive direction of the X1 axis. In other words, the Z1 axis faces a central axis of the cylindrical object 40. Furthermore, the X1 axis or the Y1 axis is included in a tangent plane of the surface 42 of the cylindrical object 40. In the present embodiment, the X1 axis, the Y1 axis, and the Z1 axis constitute a so-called right-handed coordinate system.

The X1 axis, the Y1 axis, and the Z1 axis may be interchanged with each other. Accordingly, a measurement device in which an accelerometer and an angular velocimeter are combined, or an inertial measurement unit, may be arranged on the cart 10 so that one of the three axes along which acceleration and angular velocity are measured extends in a direction normal to the surface 42 of the object 40, and the other two axes are included in the tangent plane of the surface 42 of the object 40.

The sign of angular velocity around the Z1 axis is positive in a clockwise direction toward the positive direction of the Z1 axis. Similarly, the sign of angular velocity around the X1 axis is positive in a clockwise direction toward the positive direction of the X1 axis. The sign of angular velocity around the Y1 axis is positive in a clockwise direction toward the positive direction of the Y1 axis.

The control device 16 acquires information or data from each component of the cart 10 and controls the drive device 12 of the cart 10 to move the cart 10. The control device 16 may be configured to include at least one processor, such as a Central Processing Unit (CPU) or a Graphics Processing Unit (GPU). The control device 16 may be configured with one processor or may be configured with a plurality of processors. A processor included in the control device 16 may control the traveling of the cart 10, by reading and executing a program stored in a memory unit, which will be described below.

The control device 16 may include the memory unit. The memory unit stores various types of information or data. The memory unit may store, for example, a program to be executed in the control device 16, data to be used for processing executed in the control device 16 or results of processing, or the like. The memory unit may also function as a work memory of the control device 16. For example, the memory unit may be configured to include, but is not limited to, semiconductor memory or the like. For example, the memory unit may be configured as internal memory of a processor used as the control device 16 or as a Hard Disk Drive (HDD) accessible from the control device 16. The memory unit may be configured as a non-transitory readable medium. The memory unit may be configured integrally with the control device 16, or it may be configured separately from the control device 16.

The control device 16 may include a communication unit. The communication unit may be configured to include a communication interface for communicating with other devices with wires or wirelessly. The communication interface may be configured to communicate with other devices via a network. The communication unit may be configured to include an input/output port for inputting and outputting data to and from other devices. The communication unit transmits and receives necessary data and signals to and from a process computer or a higher-level system. The communication unit may communicate based on wired communication standards or wireless communication standards. Examples of wired communication standards may include, for example, communication standards, such as Universal Serial Bus (USB), or RS-232C or RS-485. Examples of wireless communication standards may include communication standards, such as IEEE 802.11 or Bluetooth® (Bluetooth is a registered trademark in Japan, other countries, or both), or cellular phone communication standards, such as 3G, 4G, or 5G. The communication unit may support one or more of these communication standards. The communication unit may communicate with other devices and input and output data based on various standards, without being limited to these examples. The communication unit may be configured integrally with the control device 16, or it may be configured separately from the control device 16.

<Map Generation Device 20>

As illustrated in FIG. 1, the map generation device 20 includes an acquisition unit 22, a generation unit 24, and an output unit 26. The map generation device 20 is mounted on the cart 10 as illustrated in FIG. 2. The map generation device 20 may not be mounted on the cart 10.

The acquisition unit 22 acquires measurement results of acceleration and angular velocity from the sensor 15 of the cart 10, and acquires detection results of movement amount of the cart 10 from the movement amount measurement device 13 of the cart 10. In a case in which the map generation system 1 includes the inspection device 30, the acquisition unit 22 acquires inspection results of the surface 42 from the inspection device 30.

The acquisition unit 22 may be configured to include a communication interface for communicating with other devices with wires or wirelessly. The communication interface may be configured to communicate with other devices via a network. The communication unit may be configured to include an input/output port for inputting and outputting data to and from other devices. The communication unit transmits and receives necessary data and signals to and from the process computer or the higher-level system. The communication unit may communicate based on wired communication standards or wireless communication standards. Examples of wired communication standards may include, for example, communication standards, such as Universal Serial Bus (USB), or RS-232C or RS-485. Examples of wireless communication standards may include communication standards, such as IEEE 802.11 or Bluetooth®, or cellular phone communication standards, such as 3G, 4G, or 5G. The acquisition unit 22 may support one or more of these communication standards. The acquisition unit 22 may communicate with other devices and input and output data based on various standards, without being limited to these examples. The acquisition unit 22 may be configured integrally with the generation unit 24, or it may be configured separately from the generation unit 24.

The acquisition unit 22 may be configured to include input device that receives an input of information, data, or the like from a human, such as a user, who operates the map generation device 20. The input device may be configured to include, for example, a touch panel or a touch sensor, or a pointing device, such as a mouse. The input device may be configured to include physical keys. The input device may be configured to include a voice input device, such as a microphone. The acquisition unit 22 may be configured to be connectable to an external input device. The acquisition unit 22 may be configured to acquire, from the external input device, information or data input to the external input device.

The generation unit 24 generates a two-dimensional map of the surface 42 that records a path along which the cart 10 moves on the surface 42 of the object 40. In a case in which the generation unit 24 acquires inspection results of the surface 42 from the inspection device 30, the generation unit 24 reflects the inspection results in points on the two-dimensional map that correspond to positions in which the surface 42 has been inspected.

The generation unit 24 may include at least one processor, such as a CPU or GPU. The generation unit 24 may be configured with one processor or may be configured with a plurality of processors. A processor included in the generation unit 24 may realize functions of the map generation device 20, by reading and executing a program stored in a memory unit, which will be described below.

The generation unit 24 may include the memory unit. The memory unit stores various types of information, data, or the like to be used in the map generation device 20. The memory unit may store, for example, a program to be executed in the generation unit 24, data to be used for processing executed in the generation unit 24 or results of processing, or the like. The memory unit may also function as a work memory of the generation unit 24. For example, the memory unit may be configured to include, but is not limited to, semiconductor memory or the like. For example, the memory unit may be configured as internal memory of a processor used as the generation unit 24 or as a Hard Disk Drive (HDD) accessible from the generation unit 24. The memory unit may be configured as a non-transitory readable medium. The memory unit may be configured integrally with the generation unit 24, or it may be configured separately from the generation unit 24.

The output unit 26 may output or display a two-dimensional map generated by the generation unit 24 to an external device. Similarly to the acquisition unit 22, the output unit 26 may be configured to include a communication interface for communicating with other devices with wires or wirelessly. The output unit 26 may output the two-dimensional map to the external device through communication using the communication interface. The output unit 26 may be configured to include a display device for displaying the two-dimensional map. The display device may be configured to include, for example, a Liquid Crystal Display (LCD), an organic ElectroLuminescence (EL) display or an inorganic EL display, a Plasma Display Panel (PDP), or the like. The display device is not limited to these displays and may be configured to include various other types of displays.

<Inspection Device 30>

As illustrated in FIG. 2, the inspection device 30 is mounted on the cart 10. The inspection device 30 may include, for example, a surface flaw detection device that detects flaws on the surface 42 of the object 40. The surface flaw detection device may include equipment with flaw detection functions, such as an ultrasonic thickness meter, an electromagnetic ultrasonic meter, an eddy current flaw detector, or a flux leakage detector. Because the surface flaw detection device is mounted on the cart 10, it can detect flaws on the surface 42 while the cart 10 is moving on the surface 42. The surface flaw detection device may detect, for example, flaws that are present on the surface 42, or in a case in which the object 40 is a pipe, it may detect pipe wall thinning. The inspection device 30 is not limited to the surface flaw detection device and may include various other inspection devices.

The inspection device 30 may output inspection results of the surface 42 in synchronization with measurement results of acceleration and angular velocity of the cart 10 and measurement results of movement amount. For example, in a case in which measurement times are associated with measurement results of acceleration and angular velocity of the cart 10 and measurement results of movement amount, the inspection device 30 may output inspection results of the surface 42 in association with inspection times. By synchronizing the inspection results of the surface 42 with the measurement results regarding the movement of the cart 10, the inspection results can be easily associated with points on a movement path of the cart 10 recorded on a two-dimensional map generated by the map generation device 20.

The inspection device 30 may inspect the surface 42 while the cart 10 is in a stationary state. By identifying positions where the cart 10 has become stationary, inspection positions of the surface 42 are identified. By identifying the inspection positions of the surface 42, inspection results can be easily mapped to points on the movement path of the cart 10 recorded on the two-dimensional map generated by the map generation device 20.

By associating inspection positions on the surface 42 with inspection results, the map generation device 20 can reflect the inspection results in points on the two-dimensional map that correspond to the inspection positions. In other words, the map generation device 20 can reflect data including positions or the like of inspected flaw defects on the surface 42 in the two-dimensional map, by detecting flaws on the surface 42 while making the two-dimensional map of the surface 42 of the cylindrical three-dimensional object, that is, the object 40. In a case in which the map generation device 20 reflects results of flaw detection (inspection results) in the two-dimensional map, the map generation device 20 may generate a color map as the two-dimensional map.

In a case in which a device that generates a large magnetic field, such as an eddy current detector or a flux leakage detector, is used as a flaw detection device, the sensor 15 that measures the acceleration and the angular velocity of the cart 10 may be configured by elements or equipment that are less susceptible to magnetic fields.

As described above, in a case in which the map generation system 1 includes the inspection device 30, it is also referred to as a surface inspection system. The surface inspection system generates a two-dimensional map in which the surface 42 of a cylindrical three-dimensional object, that is, the object 40, is developed by the map generation device 20, and by inspecting the surface 42 of the object 40 by the inspection device 30 and combining inspection results with the two-dimensional map, results of flaw detection, namely the inspection results, can be displayed on the two-dimensional map. By visually checking the results of flaw detection, namely the inspection results, displayed on the two-dimensional map, the user can easily determine at which positions on the surface 42 of the cylindrical three-dimensional object, that is, the object 40, flaw-detected portions, or thinned-wall portions exist.

(Example Operations of Map Generation System 1)

In the map generation system 1 according to an embodiment of the present disclosure, the generation unit 24 of the map generation device 20 calculates positions of the cart 10 on the surface 42 of the object 40, based on information or data acquired by the acquisition unit 22. By plotting points corresponding to the positions of the cart 10 on a two-dimensional plane corresponding to the surface 42 of the object 40, the generation unit 24 can generate a two-dimensional map that records a movement path of the cart 10 on the two-dimensional plane. Example operations performed by the generation unit 24 to generate a two-dimensional map will be described below.

<Two-Dimensional Plane Depicting Developed Cylindrical Surface, That Is, Surface 42 of Object 40>

In a case in which the object 40 is a cylindrical three-dimensional object, the map generation device 20 may represent any position on the surface 42 of the object 40 by a cylindrical coordinate system. As illustrated in FIG. 3A, the cylindrical coordinate system can uniquely identify a position of any point in the cylindrical coordinate system by a coordinate along the Z axis that corresponds to a position in an axial direction of the cylinder, a coordinate along the r axis that corresponds to a position in a radial direction of the cylinder, and an angle θ that corresponds to a position in a circumferential direction of the cylinder.

The surface 42 of the object 40 corresponds to a cylindrical surface. In the cylindrical surface, the radius is a constant value. That is, the coordinate of the r axis that corresponds to a position in the radial direction of the cylinder is a constant value. Accordingly, any point positioned on the surface 42, that is, the cylindrical surface, is uniquely identified by two parameters: a coordinate along the Z axis that corresponds to a position in the axial direction of the cylinder; and an angle θ that corresponds to a position in the circumferential direction of the cylinder.

As illustrated in FIG. 3B, the surface 42, that is, the cylindrical surface, is developed in a two-dimensional plane with the Z axis and the θ axis. In the two-dimensional plane of FIG. 3B, the Z axis is set as the horizontal axis. The θ axis is set as the vertical axis. The θ axis is represented by a range from -180° to +180°. The two-dimensional plane depicting the developed cylindrical plane includes an upper end and a lower end for convenience. Although the angle -180° at the upper end and the angle +180° at the lower end are far apart in the two-dimensional plane depicting the developed cylindrical surface, actually, -180° at the upper end and +180° at the lower end are connected. The angles of the upper end and the lower end of the two-dimensional plane are not limited to ±180° and can be set to any other angles, such as 0° or ±90°.

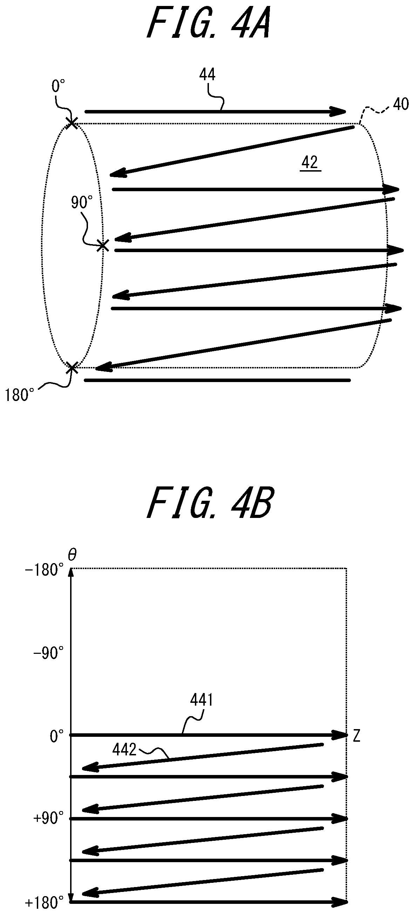

For example, as illustrated in FIG. 4A, it is assumed that the cart 10 moves in a path 44 along the axial direction of the cylinder on the surface 42 of the object 40, which is a cylindrical three-dimensional object. In this case, the path 44 recorded on the two-dimensional plane depicting the developed surface 42 is represented by a combination of a path 441, which moves in a positive direction of the Z axis that corresponds to the axial direction of the cylinder, and a path 442, which moves in a negative direction of the Z axis and also in a positive direction of the θ axis, as illustrated in FIG. 4B.

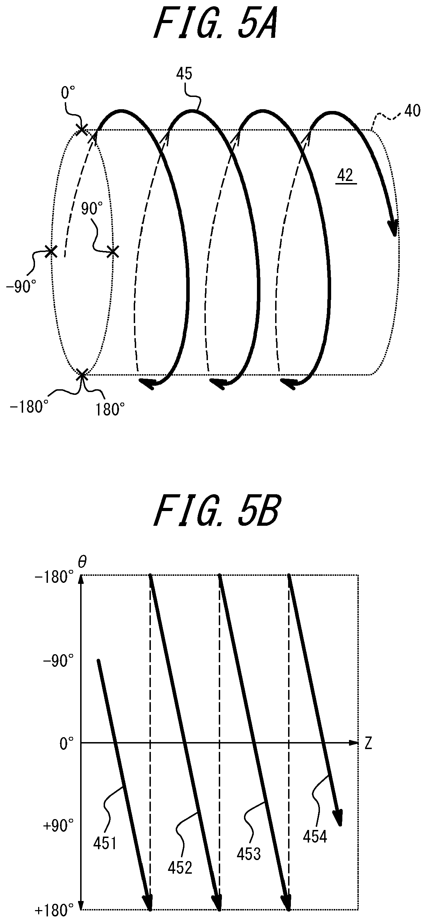

For example, as illustrated in FIG. 5A, it is assumed that the cart 10 moves in a spiral path 45 along the circumferential direction of the cylinder on the surface 42 of the object 40, which is a cylindrical three-dimensional object. In this case, the path 45 recorded on the two-dimensional plane depicting the developed surface 42 is represented by a combination of paths 451 through 454 extending from -180° to 180° on the θ axis corresponding to the circumferential direction of the cylinder, as illustrated in FIG. 5B. The Z-coordinate of a lower end of the path 451 coincides with the Z-coordinate of an upper end of path 452. That is, although the lower end of the path 451 and the upper end of the path 452 appear to be interrupted by the lower end and the upper end provided for convenience on the two-dimensional plane, they are actually connected. Similarly, the Z-coordinate of a lower end of the path 452 coincides with the Z-coordinate of an upper end of path 453. The Z-coordinate of a lower end of the path 453 coincides with the Z-coordinate of an upper end of the path 454. That is, although the paths 451 through 454 appear to be interrupted at the lower ends and the upper ends on the two-dimensional plane, they are actually connected as a single path.

<Identification of Position of Cart 10 on Surface 42 of Object 40>

In a case in which the object 40 is a cylindrical three-dimensional object, a position of the cart 10 moving on the surface 42 of the object 40 is identified by the axial coordinate and the circumferential angle in a cylindrical coordinate system corresponding to the surface 42, which is a cylindrical surface. In other words, a position of the cart 10 moving on the surface 42 of the object 40, which is a cylindrical three-dimensional object, is represented as a point on the two-dimensional plane with the Z axis corresponding to the axial direction and the θ axis corresponding to the circumferential direction in the cylindrical coordinate system. The axial coordinate corresponds to the Z-coordinate.

<Calculation of Circumferential Angle of Cart 10>

The generation unit 24 of the map generation device 20 can calculate a circumferential angle of the cart 10 based on a measurement result of acceleration of the cart 10. In the present embodiment, it is assumed that the object 40 is arranged so that the Z axis corresponding to the axial direction of the cylindrical surface, which corresponds to the surface 42 of the object 40, extends along a direction orthogonal to the vertical direction, that is, a horizontal direction.

When it is assumed that the cart 10 is positioned at the top of the cylindrical surface, that is, the surface 42 of the object 40, i.e., when the cart 10 is positioned at a point having a circumferential angle of 0°, the Z1 axis along which the sensor 15 of the cart 10 measures acceleration and angular velocity extends along a vertically upward direction.

In contrast, when the cart 10 is positioned at the bottom of the cylindrical surface, that is, the surface 42 of the object 40, i.e., when the cart 10 is positioned at a point having a circumferential angle of +180° or -180°, the Z1 axis along which the sensor 15 of the cart 10 measures acceleration and angular velocity extends along a vertically downward direction.

When the cart 10 is positioned directly next to the cylindrical surface, that is, the surface 42 of the object 40, i.e., when the cart 10 is positioned at a point having a circumferential angle of +90° or -90°, the Z1 axis along which the sensor 15 of the cart 10 measures acceleration and angular velocity extends along the direction orthogonal to the vertical direction, that is, the horizontal direction.

When the cart 10 is stationary or moving at constant velocity, the sensor 15 of the cart 10 measures acceleration corresponding to reaction force of gravity acting on the sensor 15. Gravity acts vertically downward. In contrast, the reaction force of gravity acts vertically upward. Accordingly, the direction of the acceleration corresponding to the reaction force of gravity is vertically upward. For example, when the Z1 axis along which the sensor 15 measures acceleration extends vertically upward, i.e., when the cart 10 is positioned at the point having a circumferential angle of 0°, the absolute value of the acceleration on the Z1 axis measured by the sensor 15 is equal to gravitational acceleration, and the sign of the acceleration on the Z1 axis is positive. In contrast, when the Z1 axis along which the sensor 15 measures acceleration extends vertically downward, i.e., when the cart 10 is positioned at the point having a circumferential angle of +180° or -180°, the absolute value of the acceleration on the Z1 axis measured by the sensor 15 is equal to gravitational acceleration, and the sign of the acceleration on the Z1 axis is negative.

When the cart 10 is positioned at the point having a circumferential angle of +90° or -90°, the Z1 axis along which the sensor 15 measures acceleration extends along the horizontal direction. Accordingly, the acceleration on the Z1 axis measured by the sensor 15 is zero. On the other hand, depending on the orientation of the sensor 15, at least one of the X1 axis and the Y1 axis along which the sensor 15 measures acceleration has a vertical component.

When the reference direction D1 of the cart 10 extends along the circumferential direction, the Y1 axis along which the sensor 15 measures acceleration extends along the circumferential direction. Accordingly, when the cart 10 is positioned at the point with a circumferential angle of +90° or -90°, the Y1 axis extends along the vertically upward direction or the vertically downward direction. In this case, the absolute value of the acceleration on the Y1 axis measured by the sensor 15 is equal to gravitational acceleration. The sign of the acceleration on the Y1 axis is positive when the Y1 axis extends in the vertically upward direction and negative when the Y1 axis extends in the vertically downward direction.

When the reference direction D1 of the cart 10 extends along the axial direction, Y1 along which the sensor 15 measures acceleration extends along the axial direction. In this case, the X1 axis, which is orthogonal to the Y1 axis, extends along the circumferential direction. Accordingly, when the cart 10 is positioned at the point with an circumferential angle of +90° or -90°, the X1 axis extends along the vertically upward direction or the vertically downward direction. In this case, the absolute value of the acceleration on the X1 axis measured by the sensor 15 is equal to gravitational acceleration. The sign of the acceleration on the X1 axis is positive when the X1 axis extends in the vertically upward direction and negative when the X1 axis extends in the vertically downward direction.

When the cart 10 is positioned at a point with a circumferential angle of greater than 0° and less than +90°, acceleration measured by the sensor 15 has an Z1-axis component and at least one of an X1-axis component and a Y1-axis component.

As described above, circumferential angles of the cart 10 correlate with measurement results of acceleration of the sensor 15 of the cart 10. Thus, the generation unit 24 of the map generation device 20 can calculate a circumferential angle of the cart 10, based on a measurement result of acceleration of the sensor 15.

A method of calculating the circumferential angle of the cart 10 in accordance with the orientation of the reference direction D1 at an initial position of the cart 10 will be explained below.

<<<Case in Which Reference Direction D1 of Cart 10 Extends Along Circumferential Direction>>>

As illustrated in FIG. 6A, it is assumed that the reference direction D1 of the cart 10 is oriented clockwise in the circumferential direction when the object 40 is viewed in the positive direction of the Z axis. In this case, the acceleration measured by the sensor 15 of the cart 10 has the Z1-axis component $\alpha_{z1}$ and the Y1-axis component $\alpha_{y1}$. The relationship

between the circumferential angle $\theta$, which identifies the position in the circumferential direction of the cart 10, and the acceleration $\alpha_{z1}$ on the Z1 axis and the acceleration $\alpha_{y1}$ on the Y1 axis is expressed by the following formula (A1).

$$\theta = \mathrm{atan2}\,(\alpha_{z1},\,\alpha_{y1}) \quad (A1)$$

atan2 is a function that outputs the angle between the vector with the components $(\alpha_{z1}, \alpha_{y1})$ and the Z1 axis in the plane where the Z1 axis and the Y1 axis are orthogonal.

As illustrated in FIG. 6B, it is assumed that the reference direction D1 of the cart 10 is oriented counterclockwise in the circumferential direction when the object 40 is viewed in the positive direction of the Z axis. In this case also, the acceleration measured by the sensor 15 of the cart 10 has the Z1-axis component $\alpha_{z1}$ and the Y1-axis component $\alpha_{y1}$. The relationship between the circumferential angle $\theta$, which identifies the position in the circumferential direction of the cart 10, and the acceleration $\alpha_{z1}$ on the Z1 axis and the acceleration $\alpha_{y1}$ on the Y1 axis is expressed by the following formula (A2).

$$\theta = \mathrm{atan2}\,(\alpha_{z1},\,-\alpha_{y1}) \quad (A2)$$

The difference between the formula (A1) and the formula (A2) is the sign of $\alpha_{y1}$ that is input to the atan2 function. This difference is due to the fact that the direction of the Y1 axis is opposite between FIG. 6A and FIG. 6B when the cart 10 is positioned at a point where $0° < \theta < 180°$.

<<<Case in Which Reference Direction D1 of Cart 10 Extends Along Axial Direction>>>

As illustrated in FIG. 6C, it is assumed that the reference direction D1 of the cart 10 is oriented in the positive direction of the Z axis. In this case, the acceleration measured by the sensor 15 of the cart 10 has the Z1-axis component $\alpha_{z1}$ and the X1-axis component $\alpha_{x1}$. The relationship between the circumferential angle $\theta$, which identifies the position in the circumferential direction of the cart 10, and the acceleration $\alpha_{z1}$ on the Z1 axis and the acceleration $\alpha_{x1}$ on the X1 axis is expressed by the following formula (A3).

$$\theta = \mathrm{atan2}\,(\alpha_{z1},\,\alpha_{x1}) \quad (A3)$$

atan2 is a function that outputs the angle between the vector with the components $(\alpha_{z1}, \alpha_{x1})$ and the Z1 axis in the plane where the Z1 axis and the X1 axis are orthogonal.

As illustrated in FIG. 6D, it is assumed that the reference direction D1 of the cart 10 is oriented in the negative direction of the Z1 axis. In this case also, the acceleration measured by the sensor 15 of the cart 10 has the Z1-axis component and the X1-axis component $\alpha_{x1}$. The relationship between the circumferential angle $\theta$, which identifies the position in the circumferential direction of the cart 10, and the acceleration on the Z1 axis and the acceleration $\alpha_{x1}$ on the X1 axis is expressed by the following formula (A4).

$$\theta = \mathrm{atan2}\,(\alpha_{z1},\,-\alpha_{x1}) \quad (A4)$$

The difference between the formula (A3) and the formula (A4) is the sign of $\alpha_{x1}$ input to the atan2 function. This difference is due to the fact that the orientation of the X1 axis is opposite between FIG. 6C and FIG. 6D when the cart 10 is positioned at a point where $0° < \theta < 180°$.

<<Summary>>

As mentioned above, the relationship between accelerations measured by the sensor 15 and circumferential angles differs depending on which direction in the cylindrical coordinate system representing the surface 42 of the object 40 the reference direction D1 of the cart 10 is oriented. The generation unit 24 may select a formula for calculating a circumferential angle from a measurement result of acceleration in accordance with the reference direction D1 of the cart 10. The formula for calculating the circumferential angle from the measurement result of acceleration is also referred to as the first map conversion formula. Specifically, the generation unit 24 may calculate the circumferential angle of the cart 10, by applying the measurement result of acceleration of the cart 10 to the first map conversion formula. In the map generation device 20, the first map transformation formula may be prepared in advance.

In a case in which the reference direction D1 of the cart 10 has a circumferential component and an axial component, the generation unit 24 may calculate the circumferential angle, by combining the formula to be used when the reference direction D1 of the cart 10 extends in the circumferential direction and the formula to be used when the reference direction D1 of the cart 10 extends in the axial direction.

In a case in which the reference direction D1 of the cart 10 has an inclination that is within a predetermined angle with respect to the circumferential clockwise direction, the generation unit 24 may select the formula (A1) to be used when the reference direction D1 of the cart 10 is the circumferential clockwise direction. In a case in which the reference direction D1 of the cart 10 has an inclination that is within a predetermined angle with respect to the circumferential counterclockwise direction, the generation unit 24 may select the formula (A2) to be used when the reference direction D1 of the cart 10 is circumferential counterclockwise direction. In a case in which the reference direction D1 of the cart 10 has an inclination that is within a predetermined angle with respect to the positive direction of the Z axis, the generation unit 24 may select the formula (A3) to be used when the reference direction D1 of the cart 10 is the positive direction of the Z axis. In a case in which the reference direction D1 of the cart 10 has an inclination that is within a predetermined angle with respect to the negative direction of the Z axis, the generation unit 24 may select the formula (A4) to be used when the reference direction D1 of the cart 10 is the negative direction of the Z axis. The predetermined angle may be set to a value less than 45°.

<Calculation of Axial Coordinate of Cart 10>

The generation unit 24 of the map generation device 20 can calculate a reference direction D1 of the cart 10 at any time, based on a reference direction D1 at an initial position of the cart 10 and measurement results of angular velocity by the sensor 15 of the cart 10.

As mentioned above, the Z1 axis along which the sensor 15 of the cart 10 measures angular velocity in the present embodiment is defined so that the positive direction of the Z1 axis is aligned with a normal direction of the surface 42 at a position where the housing 11 of the cart 10 is magnetically attached. The reference direction D1 of the cart 10 extends along a tangential direction of the surface 42. As the cart 10 rotates around the Z1 axis, the reference direction D1 of the cart 10 rotates around the Z1 axis. The generation unit 24 can calculate a reference direction D1 of the cart 10 at any time, by rotating the reference direction D1 at the initial position of the cart 10 by an angle calculated by integrating angular velocities around the Z1 axis and treating the resulting direction of rotation as the reference direction D1 of the cart 10.

The generation unit 24 can calculate a movement amount in an axial direction of the cart 10, based on an angle of a reference direction D1 of the cart 10 with respect to the axial direction of the cylindrical coordinate system and a measurement result of movement amount of the cart 10 by the movement amount measurement device 13. The generation unit 24 can calculate an axial coordinate of the cart 10, by adding the movement amount in the axial direction of the cart 10 to an axial coordinate at the initial position of the cart 10. The generation unit 24 can calculate the axial coordinate of the cart 10, by assuming that the axial coordinate at the initial position of the cart 10 is zero. The generation unit 24 may calculate the movement amount in the axial direction of the cart 10 from the initial position of the cart 10 as a moving distance in the axial direction of the cart 10.

The following will describe a method of calculating an axial coordinate of the cart 10 in accordance with the orientation of a reference direction D1 of the cart 10.

<<<Case in Which Reference Direction D1 at Initial Position of Cart 10 Extends Along Circumferential Direction>>>

As Illustrated in FIG. 7A, it is assumed that a reference direction D1 of the cart 10 is rotated by the angle $\theta_{z1}$ from the circumferential clockwise direction, that is, the positive direction of the $\theta$ axis, when the object 40 is viewed toward the positive direction of the Z axis. In FIG. 7A, it is assumed that the Z1 axis along which the sensor 15 of the cart 10 measures angular velocity is oriented toward the front of the paper. Accordingly, counterclockwise angles are defined as positive angles. Since counterclockwise angles are positive, the angle at which the reference direction D1 is inclined counterclockwise from the $\theta$ axis is expressed as $\theta_{z1}$.

A value of the angle $\theta_{z1}$ of the reference direction D1 of the cart 10 is calculated by integrating the angular velocity $\omega_{z1}$ around the Z1 axis measured by the sensor 15 of the cart 10. The time period for integration of the angular velocity $\omega z1$ is assumed to be the movement time t of the cart 10. In this case, the angle $\theta_{z1}$ is expressed as $\theta_{z1} = \Sigma(\omega_{z1} \times t)$. The angle $\theta_{z1}$ may also be calculated by integrating angular velocities over time.

Suppose that a movement amount along the reference direction D1 of the cart 10 is L, then the generation unit 24 can calculate the movement amount $L_z$ along the Z axis direction by the following formula (B1).

$$\mathrm{Lz} = \mathrm{L} \times \sin\left(\theta_{z1}\right) \quad \text{(B1)}$$

As illustrated in FIG. 7B, it is assumed that a reference direction D1 of the cart 10 is rotated by the angle $-\theta_{z1}$ from the circumferential counterclockwise direction, that is, the negative direction of the $\theta$ axis, when the object 40 is viewed in the positive direction of the Z axis. Suppose that a movement amount of the cart 10 along the reference direction D1 is L, then the generation unit 24 can calculate the movement amount $L_z$ along the Z axis direction by the following formula (B2).

$$Lz = L \times \sin(-\theta_{z1}) \qquad (B2)$$

The formula (B2) may be transformed into the following formula.

$$Lz = -L \times \sin(\theta_{z1})$$

<<<Case in Which Reference Direction D1 at Initial Position of Cart 10 Extends Along Axial Direction>>>

As illustrated in FIG. 7C, it is assumed that a reference direction D1 of cart 10 is rotated by the angle $\theta_{z1}$ from the positive direction of the Z axis. Suppose that a movement amount along the reference direction D1 of the cart 10 is L, then the generation unit 24 can calculate the movement amount $L_z$ along the Z axis direction by the following formula (B3).

$$Lz = L \times \cos(\theta_{z1}) \qquad (B3)$$

As illustrated in FIG. 7D, it is assumed that a reference direction D1 of the cart 10 is rotated by the angle $\theta_{z1}$ from the negative direction of the Z axis. Suppose that a movement amount along the reference direction D1 of the cart 10 is L, then the generation unit 24 can calculate the movement amount $L_z$ along the Z axis direction by the following formula (B4).

$$Lz = -L \times \cos(\theta_{z1}) \qquad (B4)$$

<<<Summary>>>

As has been described, the generation unit 24 may select a formula for calculating a movement amount in an axial direction, based on a measurement result of angular velocity and a measurement result of movement amount along a reference direction D1 of the cart 10, depending on the orientation of the reference direction D1 of the cart 10. The formula for calculating the movement amount in the axial direction is also referred to as the second map conversion formula. Specifically, the generation unit 24 may calculate a reference direction D1 of the cart 10, by calculating a rotation angle around the Z1 axis from an initial position of the cart 10 by applying a measurement result of angular velocity around the Z1 axis to the second map conversion formula. In the map generation device 20, the second map conversion formula may be prepared in advance.

In a case in which the reference direction D1 of the cart 10 has an inclination that is within a predetermined angle with respect to the circumferential clockwise direction, the generation unit 24 may select the formula (B1) so as to calculate the movement amount in the axial direction of the cart 10. In a case in which the reference direction D1 of the cart 10 has an inclination that is within a predetermined angle with respect to the circumferential counterclockwise direction, the generation unit 24 may select the formula (B2) so as to calculate the movement amount in the axial direction of the cart 10. In a case in which the reference direction D1 of the cart 10 has an inclination that is within a predetermined angle with respect to the positive direction of the Z axis, the generation unit 24 may select the formula (B3) so as to calculate the movement amount in the axial direction of the cart 10. In a case in which the reference direction D1 of the cart 10 has an inclination that is within a predetermined angle with respect to the negative direction of the Z axis, the generation unit 24 may select the formula (B4) so as to calculate the movement amount in the axial direction of the cart 10. The predetermined angle may be set to a value less than 45°.

The generation unit 24 may select any one of the formulas (B1) through (B4) regardless of whether the inclination of the reference direction D1 of the cart 10 is closer to the circumferential direction or the axial direction. Regardless of which of the formulas (B1) through (B4) is selected, the generation unit 24 can appropriately calculate the movement amount in the axial direction of the cart 10, by appropriately calculating an angle representing the inclination of the reference direction D1 of the cart 10 in that formula.

The generation unit 24 may calculate an axial coordinate of the cart 10, by adding a calculation result of movement amount in the axial direction of the cart 10 to an axial coordinate at the initial position of the cart 10.

<Generation of Two-Dimensional Map of Movement Path of Cart 10>

As described above, the generation unit 24 of the map generation device 20 can calculate a circumferential angle and an axial coordinate of the cart 10, as information identifying a position of the cart 10. The generation unit 24 can calculate a circumferential angle and an axial coordinate of the cart 10 at any time, based on measurement results of the sensor 15 and the movement amount measurement device 13 while the cart 10 is moving. The generation unit 24 may calculate a circumferential angle and an axial coordinate of the cart 10 at regular time intervals, or it may calculate a circumferential angle and an axial coordinate of the cart 10 at irregular time intervals.

The generation unit 24 can generate a two-dimensional map of a movement path of the cart 10, by plotting calculation results of circumferential angle and axial coordinate of the cart 10 at each of a plurality of times on the two-dimensional plane with the Z axis and the θ axis.

The generation unit 24 can generate, for example, a two-dimensional map as illustrated in FIG. 8, in which measurement results of position of the cart 10 are plotted and recorded as solid lines on the two-dimensional plane with the Z axis and the θ axis. The two-dimensional map of FIG. 8 is generated by magnetically attaching the cart 10 to a surface of an 1800A pipe, moving it to the right in the axial direction, and switching the direction of movement in the opposite direction every 1000 mm in the axial direction. In the two-dimensional map of FIG. 8, the points indicated by the solid circles (•) correspond to true positions of the cart 10. The solid lines plotting the measurement results were within ± 5° error in terms of the circumferential angle of the θ axis and within ± 10 % error in terms of the axial coordinate on the Z-axis, with respect to the true positions of the cart 10 that are indicated by the solid circles. In other words, it has been demonstrated that the map generation device 20 according to the present embodiment has sufficient mapping accuracy.

When generating a map, the generation unit 24 may acquire a measurement result of angular velocity around each of the X1 axis, the Y1 axis, and the Z1 axis at an initial position of the cart 10. The generation unit 24 may acquire a measurement result of angular velocity around the Z1 axis while the cart 10 is in a stationary state as calibration so as to reduce a drift error of the inertial measurement unit or the angular velocimeter, and calculate an average value of measurement results of angular velocity for 10 seconds as the drift error. The generation unit 24 may use a value obtained by subtracting the drift error from a measurement result of angular velocity around the Z1 axis as the value of angular velocity around the Z1 axis to be applied to the map transformation formula.

<Reflection of Surface Inspection Results in Two-Dimensional Map>

The generation unit 24 of the map generation device 20 may acquire inspection results of the surface 42 of the object 40 from the inspection device 30. The generation unit 24 may associate positions of the cart 10 with the inspection results of the surface 42 at the positions, and reflect the inspection results of the surface 42 at the corresponding positions of the two-dimensional map that records a movement path of the cart 10. In other words, when the cart 10 moves to a predetermined position, the inspection device 30 may inspect the surface at the predetermined position. The generation unit 24 may reflect the inspection result of the surface 42 at the predetermined position in a point on the two-dimensional map that corresponds to the predetermined position.

For example, in a case in which flaws on the surface 42 are detected as the inspection of the surface 42, the generation unit 24 may reflect defects, such as flaw positions or thinned-wall positions, present on the surface 42 in the two-dimensional map. When reflecting the inspection results in the two-dimensional map, the generation unit 24 may generate the two-dimensional map as a color map.

In the map generation system 1 according to the present embodiment, the map generation device 20 and the inspection device 30 are combined, so that inspection results of the surface 42 by the inspection device 30 are reflected and displayed in a two-dimensional map. Displaying the inspection results of the surface 42 makes it easy to visually determine at which positions on the surface 42 of the object 40 defects, such as flaw-detected portions or thinned-wall portions, exist.

<Example Procedures of Map Generation Method>

The generation unit 24 of the map generation device 20 may execute a map generating method including the flowchart procedures illustrated in FIG. 9. The map generation method may be realized as a map generation program to be executed by a processor included in the generation unit 24. The map generation program may be stored on a non-transitory computer-readable medium.

The generation unit 24 acquires a reference direction D1 at an initial position of the cart 10 (Step S1). The generation unit 24 selects the first map transformation formula and the second map transformation formula depending on whether the reference direction D1 extends along the circumferential direction or the axial direction (Step S2). The procedure of Step S2 is also referred to as a map transformation formula selection step.

The generation unit 24 acquires measurement results of acceleration and angular velocity of the cart 10 (Step S3). The generation unit 24 acquires a measurement result of movement amount along the reference direction D1 of the cart 10 (Step S4). The procedures of Step S3 and Step S4 are also referred to as an acquisition step.

The generation unit 24 applies the measurement result of acceleration of the cart 10 to the first map transformation formula selected in the procedure of Step S2, so as to calculate a circumferential angle of the cart 10 (Step S5). The procedure of Step S5 is also referred to as a circumferential angle calculation step.

The generation unit 24 applies an angle of the reference direction D1 of the cart 10 with respect to the θ axis or the Z axis and the measurement result of movement amount of the cart 10 to the second map transformation formula selected in the procedure of Step S2, so as to calculate a movement amount in the axial direction of the cart 10 (Step S6). In the procedure of Step S6, the generation unit 24 may calculate again the angle of the reference direction D1 of the cart 10 with respect to the θ axis or the Z axis, based on the measurement result of angular velocity of the cart 10.

The generation unit 24 calculate an axial coordinate of the cart 10, by adding the movement amount in the axial direction of the cart 10 calculated in the procedure of Step S6 to an axial coordinate at the initial position of the cart 10 (Step S7). The procedure of Step S7 is also referred to as an axial coordinate calculation step.

The generation unit 24 plots a position of the cart 10 identified by the circumferential angle of the cart 10 calculated in the procedure of Step S5 and the axial coordinate of the cart 10 calculated in the procedure of Step S7 on the two-dimensional plane with the θ axis and the Z axis and generates a two-dimensional map that records a movement path of the cart 10 (Step S8) . The procedure of Step S8 is also referred to as a map generation step.

The generation unit 24 determines whether an inspection result of the surface 42 has been acquired from the inspection device 30 (Step S9). When an inspection result of the surface 42 has not been acquired (Step S9: NO), the generation unit 24 terminates execution of the flowchart procedures of FIG. 9. When an inspection result of the surface 42 has been acquired (Step S9: YES), the generation unit 24 reflects the inspection result of the surface 42 in a point on the two-dimensional map that corresponds to the position where the inspection was performed (Step S10). After executing the procedure of Step S10, the generation unit 24 terminates execution of the flowchart procedures of FIG. 9.

After completing the procedure of Step S10, the generation unit 24 may return to the procedure of Step S1 and repeat the calculation of position of the cart 10 and the generation of two-dimensional map. In the procedure of Step S1, the generation unit 24 may use the position of the cart 10 calculated in the procedures of Step S5 and Step S7 as a new initial position and acquire a reference direction D1 of the cart 10.

(Conclusion)

As described above, according to the map generation device 20 and the map generation method of the present embodiment, by using two map transformation formulas, including one formula for calculating a circumferential angle and one formula for calculating an axial coordinate, the circumferential angle and the axial coordinate of the cart 10 moving on the surface 42 of the cylindrical object 40 are respectively calculated, based on measurement results of acceleration and angular velocity of the cart 10 and a measurement result of moving distance.

A map transformation formula is selected in accordance with the orientation of a reference direction D1 of the cart 10. Specifically, in a case in which the cart 10 moves along the circumferential direction from its initial position, it moves spirally on the surface 42 of the cylindrical object 40. In a case in which the cart 10 moves along the axial direction from its initial position, the cart 10 moves on the surface of the cylindrical object 40 while turning back and forth. Accordingly, the generation unit 24 of the map generation device 20 may select a map transformation formula depending on whether the reference direction D1 of the cart 10 is oriented clockwise or counterclockwise in the circumferential direction, or whether the reference direction D1 of the cart 10 is oriented in the positive direction or the negative direction of the axial direction.

By plotting respective calculation results of circumferential angle and axial coordinate of the cart 10 on the two-dimensional plane with the θ axis and the Z axis, a two-dimensional map that records a movement path of the cart 10 is generated.

That is, a two-dimensional map that records a movement path of the cart 10 is generated, based on measurement results of acceleration and angular velocity of the cart 10 and measurement results of moving distance. Thus, according to the map generation device 20 and the map generation method of the present embodiment, a two-dimensional map is generated without inputting a diameter of the cylindrical object 40. As a result, even when the diameter of the cylindrical object 40 is unknown, a two-dimensional map that records a movement path of the cart 10 is easily and accurately generated.

In particular, in the embodiment described above, by selecting a map conversion formula in accordance with a reference direction D1 at an initial position of the cart 10, a two-dimensional map that records a movement path of the cart 10 can be easily and accurately generated, even in a case in which the cart 10 moves in any direction including the circumferential direction and the axial direction.

(Modification)

In an embodiment described above, the angle θ illustrated in FIG. 3A that corresponds to the position in the circumferential direction of the cylinder and the θ axis illustrated in FIG. 3B on the two-dimensional plane with the Z axis and the θ axis are represented in the range from -180° to +180°. Here, the angle θ corresponding to the position in the circumferential direction of the cylinder and the θ axis on the two-dimensional plane are not limited to the aforementioned examples and may be represented in other ranges of values. For example, as illustrated in FIG. 10A and FIG. 10B, the angle θ corresponding to the position in the circumferential direction of the cylinder and the θ axis on the two-dimensional plane may be represented in the range from 0° to 360°.

Although the angle 0° at an upper end and the angle 360° at a lower end are far apart in the two-dimensional plane depicting the developed cylindrical surface, actually, 0° at the upper end and 360° at the lower end are connected. The angles of the upper end and the lower end of the two-dimensional plane are not limited to 0° and 360° and can be set to any other angles, such as 90°, 180°, or 270°.

In a case in which the angle $\theta$ and the $\theta$ axis are represented in the range from 0° to 360°, the aforementioned first map transformation formulas (A1) through (A4) are replaced by the following formulas (A1') through (A4').

$$\theta = \text{atan2}\ (-\alpha_{z1},\ -\alpha_{y1}) \quad (A1')$$

$$\theta = \text{atan2}\ (-\alpha_{z1},\ \alpha_{y1}) \quad (A2')$$

$$\theta = \text{atan2}\ (-\alpha_{z1},\ -\alpha_{x1}) \quad (A3')$$

$$\theta = \text{atan2}\ (-\alpha_{z1},\ \alpha_{x1}) \quad (A4')$$

The aforementioned second map transformation formulas (B1) through (B4) are also replaced by the following formulas (B1') through (B4').

$$Lz = L \times \sin\ (\theta_{z1}) \quad (B1')$$

$$Lz = L \times \sin\ (-\theta_{z1}) \quad (B2')$$

$$Lz = L \times \cos\ (\theta_{z1}) \quad (B3')$$

$$Lz = -L \times \cos\ (\theta_{z1}) \quad (B4')$$

As has been described as a modification, even when the representation of the numerical value range of the angle $\theta$ and the $\theta$ axis is changed, it is possible to calculate a circumferential angle and an axial coordinate of the cart 10 in the same manner as in an embodiment described above.

While an embodiment of the present disclosure has been described with reference to the drawings and examples, it is to be noted that various modifications and changes may be made by those skilled in the art based on the present disclosure. Accordingly, such modifications or changes are included within the scope of the present disclosure. For example, functions or the like included in each component, each step, or the like can be rearranged without logical inconsistency, and a plurality of components, steps, or the like can be combined into one or divided. An embodiment according to the present disclosure can be implemented as a program that is executed by a processor included in the device, or as a storage medium in which the program is recorded. It is to be understood that these are included within the scope of present disclosure.

In an embodiment described above, a configuration example in which a two-dimensional map of an outer circumference of a cylindrical object as the surface 42 of the object 40 is generated is described, but a two-dimensional map of an inner circumference of a cylindrical object may be generated as the surface 42 of the object 40, without being limited to an outer circumference of a cylindrical object. In a case in which the cart 10 moves on an inner circumferential surface of a cylindrical object, the orientation of the cart 10, that is, the axis of the sensor 15, is reversed compared to a case in which the cart 10 moves on an outer circumferential surface of a cylindrical object. Accordingly, by reversing the sign of at least some of the parameters, such as acceleration, included in the aforementioned map transformation formulas, it is possible to generate a two-dimensional map of an inner surface of a cylindrical object.

REFERENCE SIGNS LIST

| | |
|---|---|
| 1: | Map generation system |
| 10: | Cart |
| (11: | Housing, |

| 12: | Drive device, |
|---|---|
| 13: | Movement amount measurement device, |
| 14: | Wheel, |
| 15: | Sensor, |
| 16: | Control device) |
| 20: | Map generation device |
| (22: | Acquisition unit, |
| 24: | Generation unit, |
| 26: | Output unit) |
| 30: | Inspection device |
| 40: | Object |
| (42: | Surface) |
| 44, 441, 442, 45, 451-454: | Movement path |

**Claims**

1. A map generation method of generating a two-dimensional map of a movement path of a cart that moves on a surface of a cylindrical or a tubular three-dimensional object, the map generation method comprising:

    an acquisition step of acquiring measurement results of acceleration and angular velocity of the cart while the cart moves on the surface of the three-dimensional object, and a measurement result of moving distance of the cart on the surface of the three-dimensional object;
    a circumferential angle calculation step of calculating a circumferential angle of the cart on the surface of the three-dimensional object, by applying the measurement result of acceleration acquired in the acquisition step to a first map transformation formula;
    an axial coordinate calculation step of calculating an axial coordinate of the cart on the surface of the three-dimensional object, by applying the measurement result of angular velocity and the measurement result of moving distance acquired in the acquisition step to a second map transformation formula; and
    a map generation step of generating a two-dimensional map that records a position identified by the circumferential angle calculated in the circumferential angle calculation step and the axial coordinate calculated in the axial coordinate calculation step.

2. The map generation method according to claim 1, further comprising
a map transformation formula selection step of selecting the first map transformation formula and the second map transformation formula, based on a reference direction at an initial position of the cart that moves on the surface of the three-dimensional object.

3. A map generation device comprising:

    a generation unit configured to generate a two-dimensional map of a movement path of a cart that moves on a surface of a cylindrical or a tubular three-dimensional object; and
    an acquisition unit configured to acquire measurement results of acceleration and angular velocity of the cart, and a measurement result of moving distance of the cart on the surface of the three-dimensional object, wherein
    the generation unit is configured to:

        calculate a circumferential angle of the cart on the surface of the three-dimensional object, by applying the measurement result of acceleration of the cart to a first map transformation formula;
        calculate an axial coordinate of the cart on the surface of the three-dimensional object, by applying the measurement result of angular velocity of the cart and the measurement result of moving distance of the cart to a second map transformation formula; and
        generate a two-dimensional map that records a position identified by the circumferential angle of the cart and the axial coordinate of the cart.

4. The map generation device according to claim 3, further comprising:

    an accelerometer configured to measure acceleration of the cart; and
    an angular velocimeter configured to measure angular velocity of the cart.

5. The map generation device according to claim 3, further comprising
an inertial measurement unit configured to measure acceleration and angular velocity of the cart along three axes.

6. The map generation device according to claim 5, wherein the inertial measurement unit is arranged on the cart so that one of the three axes along which acceleration and angular velocity are measured extends in a direction normal to the three-dimensional object, and other two axes are included in a tangent plane of the surface of the three-dimensional object.

7. A surface inspection device comprising:

the map generation device according to any one of claims 3 to 6; and
an inspection device configured to inspect the surface at a predetermined position when the cart moves to the predetermined position,
wherein
the generation unit of the map generation device is configured to reflect an inspection result of the surface at the predetermined position in a point on the two-dimensional map that corresponds to the predetermined position.

# FIG. 1

1

10

## Cart

16 — Control device

12 — Drive device

13 — Movement amount measurement device

15 — Sensor

20

## Map generation device

22 — Acquisition unit

24 — Generation unit

26 — Output unit

Inspection device — 30

# FIG. 2

## FIG. 3A

## FIG. 3B

## FIG. 4A

## FIG. 4B

## FIG. 5A

## FIG. 5B

FIG. 6A

FIG. 6B

FIG. 6C

FIG. 6D

*FIG. 7A*

*FIG. 7B*

FIG. 7C

FIG. 7D

FIG. 8

EP 4 636 528 A1

# FIG. 9

```
                    ┌──────────┐
                    │  Start   │
                    └──────────┘
                          │
                          ▼
┌──────────────────────────────────────────────────────┐
│ Acquire reference direction at initial position of cart│──S1
└──────────────────────────────────────────────────────┘
                          │
                          ▼
┌──────────────────────────────────────────────────────┐
│            Select map transformation formula            │──S2
└──────────────────────────────────────────────────────┘
                          │
                          ▼
┌──────────────────────────────────────────────────────┐
│       Acquire acceleration and angular velocity of cart │──S3
└──────────────────────────────────────────────────────┘
                          │
                          ▼
┌──────────────────────────────────────────────────────┐
│            Acquire movement amount of cart              │──S4
└──────────────────────────────────────────────────────┘
                          │
                          ▼
┌──────────────────────────────────────────────────────┐
│          Calculate circumferential angle of cart        │──S5
└──────────────────────────────────────────────────────┘
                          │
                          ▼
┌──────────────────────────────────────────────────────┐
│   Calculate movement amount in axial direction of cart  │──S6
└──────────────────────────────────────────────────────┘
                          │
                          ▼
┌──────────────────────────────────────────────────────┐
│            Calculate axial coordinate of cart           │──S7
└──────────────────────────────────────────────────────┘
                          │
                          ▼
┌──────────────────────────────────────────────────────┐
│          Generate two-dimensional map that             │──S8
│          records movement path of cart                 │
└──────────────────────────────────────────────────────┘
                          │
                          ▼
          ╱────────────────────────────────────────╲
     NO  ╱  Has inspection result of surface been acquired?  ╲──S9
    ◄───╱                                                    ╲
        ╲────────────────────────────────────────╱
   │                      │ YES
   │                      ▼
   │    ┌──────────────────────────────────────────────────┐
   │    │       Reflect inspection result of surface in map │──S10
   │    └──────────────────────────────────────────────────┘
   │                      │
   └──────────────────────┤
                          ▼
                    ┌──────────┐
                    │   End    │
                    └──────────┘
```

# FIG. 10A

# FIG. 10B

**EP 4 636 528 A1**

# INTERNATIONAL SEARCH REPORT

| International application No. |
|---|
| **PCT/JP2024/009402** |

## A. CLASSIFICATION OF SUBJECT MATTER

*G05D 1/43*(2024.01)i; *G05D 1/648*(2024.01)i
FI: G05D1/43; G05D1/648

According to International Patent Classification (IPC) or to both national classification and IPC

## B. FIELDS SEARCHED

Minimum documentation searched (classification system followed by classification symbols)

G05D1/43; G05D1/648

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2004-125752 A (SUMITOMO METAL INDUSTRIES, LTD.) 22 April 2004 (2004-04-22) paragraphs [0020]-[0058], fig. 1-12 | 1, 3-7 |
| A | | 2 |
| Y | JP 2006-118972 A (JFE ENGINEERING CORPORATION) 11 May 2006 (2006-05-11) paragraphs [0019], [0026] | 1, 3-7 |
| Y | JP 1-202655 A (ATLANTIC RICHFIELD CO.) 15 August 1989 (1989-08-15) p. 6, upper left column, line 8 to p. 6, upper right column, line 2, fig. 8a | 1, 3-7 |
| A | WO 2022/123833 A1 (JFE STEEL CORPORATION) 16 June 2022 (2022-06-16) entire text, all drawings | 1-7 |
| A | JP 2007-132713 A (SHIN NIPPON HIHAKAI KENSA KK) 31 May 2007 (2007-05-31) entire text, all drawings | 1-7 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/009402**

| Patent document cited in search report | | | Publication date (day/month/year) | Patent family member(s) | Publication date (day/month/year) |
|---|---|---|---|---|---|
| JP | 2004-125752 | A | 22 April 2004 | (Family: none) | |
| JP | 2006-118972 | A | 11 May 2006 | (Family: none) | |
| JP | 1-202655 | A | 15 August 1989 | US 4843319 A column 6, line 63 to column 7, line 11, fig. 8a EP 0321111 A1 | |
| WO | 2022/123833 | A1 | 16 June 2022 | EP 4220148 A1 KR 10-2023-0098860 A CN 116710769 A | |
| JP | 2007-132713 | A | 31 May 2007 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0949730 A
- JP 2001050736 A
- JP 2006170766 A